# EUROPÄISCHE PATENTSCHRIFT

(11) **EP 4 602 282 B1**
(45) Veröffentlichungstag und Bekanntmachung des Hinweises auf die Patenterteilung: **26.08.2026**
(21) Anmeldenummer: 23798331.7
(22) Anmeldetag: 13.10.2023
(51) Int. Cl.: F16H 25/22, B30B 1/18, F16H 25/24, H02K 7/06, F16H 25/20

(54) **ELEKTROMECHANISCHER SPINDELANTRIEB**
ELECTROMECHANICAL SPINDLE DRIVE
ENTRAÎNEMENT DE BROCHE ÉLECTROMÉCANIQUE

(30) Priorität: 13.10.2022 AT 507942022
(43) Veröffentlichungstag der Anmeldung: 20.08.2025
(73) Patentinhaber: TRUMPF Maschinen Austria GmbH & Co. KG., 4061 Pasching (AT)
(72) Erfinder: SPEZIALI, Stefano, 06034 Foligno (IT)
(74) Vertreter: Burger, Hannes Alfred
(86) Internationale Anmeldenummer: PCT/AT2023/060350
(87) Internationale Veröffentlichungsnummer: WO 2024/077321

(56) Entgegenhaltungen:
- EP-A2- 2 349 704
- EP-B1- 2 349 704
- DE-A1- 102019 219 813
- US-A1- 2012 192 663
- US-B1- 6 453 761

## Beschreibung

Die Erfindung betrifft einen Elektromechanischen Spindelantrieb, umfassend ein Gehäuse, eine Rotationseinheit mit einer Spindelmutter, die mittels eines Motors um eine Rotationsachse in Rotation versetzbar ist; sowie eine Spindel, die einen mit der Rotationseinheit zusammenwirkenden Gewindeabschnitt aufweist und mittels der Rotationseinheit durch die Rotation axial verstellbar ist, sodass die Spindel aus einem Spindelaustrittsende der Rotationseinheit vice versa verstellbar ist, wobei zwischen einem Stellgewinde der Rotationseinheit und dem Gewindeabschnitt mehrere Rollelemente zur Lagerung der Spindel angeordnet sind und das Stellgewinde in einem Wirkabschnitt der Rotationseinheit radial zur Rotationsachse einen begrenzenden Außendurchmesser zur Führung der Rollelemente aufweist.

Aus der EP2334450B1 ist ein elektromechanischer Aktor, für Abkantpressen offenbart, mit einen äußeren Gehäusekörper, sowie einer Leitspindel, positioniert im Gehäusekörper, aufweisend eine Innenfläche mit Gewinde. Ferner weist der Aktor einen Schaft auf, der in der Lage ist, mit einem Abkantwerkzeug verbunden zu werden und der ein Gewinde aufweist, das intern betriebswirksam mit der Leitspindel verbunden ist; und Motormittel, positioniert im äu-βeren Körper, um die Leitspindel um ihre eigene Längsachse in Drehung zu versetzen, wobei die Drehung der Leitspindel die axiale Verschiebung des Schafts bewirkt. Zudem ist mindestens eine Verbindungsstange vorgesehen, um die auf den Schaft wirkenden axialen Lasten zu dämpfen, sowie Mittel zum Übertragen der axialen Lasten vom Schaft auf die Verbindungsstange, wobei die Verbindungsstange an einem Anschlussabschnitt des Gehäusekörper positioniert ist, um mit einem Halteflansch einer Abkantpresse verbunden zu werden, um die Lasten unmittelbar auf den Anschlussabschnitt und den Flansch zu übertragen. US 6 453 761 B1 offenbart ein lineares Stellglied mit einer Kugelumlaufspindel und einer Mutter, die von einem Elektromotor angetrieben wird. Das Stellglied umfasst ein umschließendes Motorgehäuse mit einer Vorder- und einer Rückwand, die axial ausgerichtete Öffnungen zum freien Durchgang der Kugelumlaufspindel aufweisen, sowie einen Elektromotor mit Außendrehung, der in das Gehäuse integriert ist und eine radial innere, hohle Statorbaugruppe und eine, radial äußere Rotorbaugruppe umfasst.

Nachteilig bei derartigen elektromechanische Antrieben aus dem Stand der Technik ist, dass diese trotz der Kugelführrungen und Umlaufelemente dennoch nicht optimale Verstellbewegungen hinsichtlich eines Anfahrverhaltens ohne Last sowie eines Stellverhaltens unter Last bezüglich der Spindel gegenüber deren rotierenden Teile aufweisen.

Aufgabe der vorliegenden Erfindung war es, die Nachteile des Standes der Technik zu überwinden und einen elektromechanischen Spindelantrieb zur Verfügung zu stellen, der ein verbessertes Anfahrverhalten gewährleistet und dennoch ein präzises Stellverhalten eines Aktors ermöglichen kann.

Diese Aufgabe wird durch einen elektromechanischen Spindelantrieb gemäß Anspruch 1 gelöst. Die Unteransprüche zeigen vorteilhafte Ausgestaltungsformen der Erfindung.

Der erfindungsgemäße elektromechanische Spindelantrieb zeichnet sich dadurch aus, dass wie die Rotationseinheit einen dem Spindelaustrittsende abgewandt angeordneten Aufnahmeabschnitt aufweist, der zur teilweisen Aufnahme des Gewindeabschnittes der Spindel mit den Rollelementen vorgesehen ist, wobei ein Durchmesser des Aufnahmeabschnittes zur Begrenzung der Rollelemente radial zur Rotationsachse größer als der Außendurchmesser dimensioniert ist, sodass die Rollelemente radial zwischen dem Gewindeabschnitt und dem Aufnahmeabschnitt der Rotationseinheit ein mechanisches Spiel aufweisen. So kann der Aufnahmeabschnitt als "Parkposition" für die Rollelemente genützt werden, wobei die Rollelemente im Bereich des Aufnahmeabschnittes größtenteils unbelastet zwischen der Spindel und der Rotationseinheit aufgenommen sind. So kann vorgesehen sein, dass die Rollelemente über den gesamten Aufnahmeabschnitt im Wesentlichen (zumindest radial) unbelastet sind.

Die erfindungsgemäße Ausbildung weist den Vorteil auf, dass die Spindel beim Anfahren aus ihrer Startposition bzw. beim Zurückfahren in diese besonders leichtgängig verfahren werden kann und ein wesentlich besseres Stick-Slip-Verhalten aufweist, bzw. eine geringere Losbrechkraft erfordert, um die Spindel in Bewegung zu versetzen. Ebenso resultiert dadurch bei der Rückverstellung in die Startposition ein wesentlich geringerer Widerstand durch die Rollelemente, wodurch die Verstellung durch den Elektromotor energieeffizienter ist.

Ebenfalls gestaltet sich die Herstellung der Rotationseinheit bzw. der Spindelmutter wesentlich einfacher und günstiger, da das Stellgewinde nur bis zu dem Aufnahmeabschnitt gefertigt werden muss, und der Aufnahmeabschnitt selbst mit größeren Toleranzen, bzw. mit einfacheren und wirtschaftlicheren Verfahren hergestellt werden kann.

Zudem kann mittels der erfindungsgemäßen Maßnahme der Systemhub in Richtung des Spindelaustrittsendes verlagert werden, da im Bereich des Aufnahmeabschnittes die Spindel des Spindelantriebes in der Regel nicht unter Last betrieben wird, wodurch größere Hubdistanzen des Systems realisierbar sind. Die Realisierung eines Stellgewindes erfordert präzise Herstellungsverfahren, wobei diese bezüglich der Gewindelängen hinsichtlich der Schneid- und Schleifvorgänge zur Herstellung des Stellgewindes axial begrenzt sind. Aufgrund der axialen Erweiterung durch den Aufnahmeabschnitt kann somit die Gesamtlänge des Systems erhöht werden. So kann beispielsweise ein Hubsystem mit 230 bis 250mm auf eine Hublänge von 430 bis 450mm erhöht werden.

Der Aufnahmeabschnitt kann, zudem abhängig von der genauen Ausführungsform, bevorzugt mittels Drehen ausgeformt werden und erfordert zudem keine weiteren besonderen Verfahrensschritte zu dessen Herstellung.

An diesem Punkt sei erwähnt, dass aus dem Stand der Technik bekannt ist, dass derartige gelagerte Rollelemente bezüglich einer Rotation grundsätzlich ein gewisses Spiel gegenüber ihrer Lagerung und auch aufgrund ihrer Toleranzen aufweisen. Mit dem erfindungsgemäßen mechanischem Spiel ist jedoch ein zusätzliches, erweitertes Spiel zwischen der Spindel und der Rotationseinheit mittels der Rollelemente gemeint, welches derart ausgebildet ist, dass die Rollelemente im Aufnahmeabschnitt gegenüber dem Wirkabschnitt zumindest radial entlastbar sind. Bevorzugt können somit lediglich nur mehr jene Rollelemente, welche sich im Wirkabschnitt befinden, bezüglich der Spindellagerung radial belastet sein und die Rollelemente im Aufnahmeabschnitt weisen das erfindungsgemäße Spiel auf.

Eine mögliche Ausführungsform sieht vor, dass der Aufnahmeabschnitt hohlzylindrisch ausgebildet ist, wobei der Durchmesser durch eine Mantelinnenfläche des hohlzylindrischen Aufnahmeabschnittes gebildet ist. Mittels dieser Ausgestaltung kann vorgesehen sein, dass die Rollelemente im Aufnahmeabschnitt lediglich durch den Gewindeabschnitt der Spindel geführt sind und gegenüber der Rotationseinheit frei beweglich sind, wodurch eine besonders leichtgängige Ausführungsform der Lagerung sowie eine Gewichtseinsparung realisierbar ist. Ferner weist der hohlzylindrische Abschnitt den weiteren Vorteil auf, dass das Einbringen von Schmiermittel und dessen Verteilung im Bereich des Aufnahmeabschnittes besser erfolgt, da das Schmiermittel frei zwischen die Rollelemente einfließen kann.

Eine weitere mögliche Ausführungsform sieht vor, dass der Aufnahmeabschnitt ein Innengewinde aufweist, wobei der Durchmesser durch einen Gewindedurchmesser des Innengewindes gebildet ist. Vorteilhaft bei dieser Ausführungsform ist, dass die Rollelemente gleichmäßig bezüglich Ihrer Bewegung im Aufnahmeabschnitt geführt bzw. in das Stellgewinde überführt werden können und dennoch das radiale Spiel aufgrund des größeren Gewindedurchmessers aufweisen. Somit kann das Innengewinde des Aufnahmeabschnittes dem Stellgewinde hinsichtlich einer Gewindesteigung im Wesentlichen nachempfunden sein, und lediglich radial den radial größeren Durchmesser aufweisen.

Weiters kann auch vorgesehen sein, dass im Aufnahmeabschnitt ein Gewinde ausgebildet ist, dass z.B. axial bezüglich seines Gewindeganges derart bemessen ist, dass axial innerhalb seines Gewindeganges zwei Rollelemente übereinander aufgenommen werden können, bzw. in einem Gewindegang des Aufnahmeabschnittes zwei Gewindegänge des Gewindeabschnittes der Spindel.

Eine vorteilhafte Weiterbildung sieht vor, dass eine Differenz zwischen dem Durchmesser und dem Außendurchmesser, bzw. das mechanische Spiel 0,025 bis 0,35, bevorzugt 0,05mm bis 0,2mm, insbesondere 0,1mm bis 0,15 mm beträgt. So kann eine weitgehend präzise Lagerung und Führung der Rollelemente bei gleichzeitiger Entlastung dieser im Aufnahmeabschnitt gewährleistet werden. Der Außendurchmesser des Gewindes kann dabei bevorzugt in einem Bereich von ca. 100 mm bis 140mm liegen und ein Kugeldurchmesser der Rollelemente in etwa 10 bis 16mm.

In einer Weiterbildung kann vorgesehen sein, dass entlang der Rotationsachse eine Höhe des Aufnahmeabschnittes derart gewählt ist, dass der Gewindeabschnitt im Aufnahmeabschnitt aufnehmbar ist und gleichzeitig im Wirkabschnitt des Stellgewindes mittels der Rollelemente radial zur Rotationsachse in einem Winkel von zumindest 270° gelagert ist. Diese Ausgestaltung bringt den Vorteil mit sich, dass der Aufnahmeabschnitt größtmöglich gewählt werden kann und dennoch eine Lagerung der Spindel durch die Rollelemente im Wirkabschnitt über zumindest 4 um 90° versetzte Kontaktpunkte möglich ist, sodass die Ausrichtung der Spindel zur Rotationsachse gewährleistet ist.

Eine mögliche Ausführung sieht vor, dass entlang der Rotationsachse eine Höhe des Aufnahmeabschnittes einer Länge des Gewindeabschnittes abzüglich zumindest einer Steigung des Gewindeabschnittes entspricht. So ist die Spindel mittels zumindest einer bezüglich des Gewindes in Umfangsrichtung (zumindest einmal) umlaufenden Anordnung der Rollelemente gegenüber dem Wirkabschnitt des Stellgewindes lager- bzw. aufnehmbar.

Ferner kann vorgesehen sein, dass im Aufnahmeabschnitt den Rollelementen zugewandt eine Beschichtung vorgesehen ist, wobei die Beschichtung zumindest eine der folgenden Eigenschaften aufweist;
- eine höhere Wärmeleitfähigkeit als ein Material des Stellgewindes.
- einen geringeren Reibungskoeffizienten als das Material des Stellgewindes.

Vorteilhaft durch diese Maßnahme ist eine verbesserte Kühlung der Rollelemente durch die höhere Wärmeleitfähigkeit, sowie ein noch besseres Stick-slip-Verhalten , bzw. leichtgängigeres Verhalten der Rollelemente und der Spindel gegenüber der Rotationseinheit aufgrund des geringeren Reibungskoeffizienten. Weiters kann die Schicht auch eine geringere Härte aufweisen.

Eine vorteilhafte Ausführungsform sieht vor, dass im Aufnahmeabschnitt ein Kunststoffgehäuse zur Aufnahme der Rollelemente angeordnet ist. Bevorzugt ist dabei der Durchmesser mittels des Kunststoffgehäuses ausgebildet. Das Kunststoffgehäuse kann dabei wiederum ein Innengewinde oder eine hohlzylindrische Form aufweisen. Ein wesentlicher Vorteil des Kunststoffgehäuses ist die Geräuschminderung sowie die Gewichts- und Kosteneinsparung. Besonders bevorzugt kann sich das Kunststoffgehäuse über die Gesamtlänge bzw. Höhe des Aufnahmeabschnitte erstrecken. Ein weiter Vorteil ist die Gestaltungsfreiheit des Kunststoffgehäuses, das dieses z.B. frei geformt und danach in die Rotationseinheit eingesetzt werden kann, oder aber auch an diese angeformt werden kann, z.B. mittels Extrusion.

Eine Ausführungsform sieht vor, dass im Aufnahmeabschnitt zumindest ein Schmiermittelkanal vorgesehen ist. Der Schmiermittelkanal mündet dabei bevorzugt im Aufnahmeabschnitt zu den Rollelementen ein. Eine erste Öffnung des Schmiermittelkanals zur Einbringung des Schmiermittels kann sich in einem oberen Ende der Rotationseinheit, dem Spindelaustrittsende abgewandt, befinden. Besonders bevorzugt kann der Schmiermittelkanal in einem zuvor erwähnten Kunststoffgehäuse ausgebildet sein.

Eine bevorzugte Ausführungsform sieht vor, dass bezüglich der Rotationsachse mittels des Aufnahmeabschnittes axial ein zweites Ende der Rotationseinheit bezüglich der Verstellung der Spindel gebildet ist. Somit ist der Wirkabschnitt des Stellgewindes lediglich zwischen dem Aufnahmeabschnitt und dem Spindelaustrittsende angeordnet und der Aufnahmeabschnitt kann somit eine Endposition bezüglich der Verstellung der Spindel ausbilden.

Eine alternative Ausführung sieht vor, dass entlang der Rotationsachse dem Spindelaustrittsende gegenüberliegend nach dem Aufnahmeabschnitt ein weiterer Teil des Wirkabschnittes des Stellgewindes angeordnet ist, sodass der Aufnahmeabschnitt bezüglich der Rotationsachse zwischen Teilbereichen des Stellgewindes angeordnet ist. So kann beispielsweise vorgesehen sein, dass die Rollelemente bei Erreichen einer dem Spindelaustrittsende abgewandten Endposition durch die Spindel, erneut in einem Teil des Wirkabschnittes des Stellgewindes eintreten, wodurch eine Führung des Gewindeabschnittes der Spindel an zwei Endbereichen des Aufnahmeabschnittes möglich ist.

Ferner wird die eingangs genannte Aufgabe durch eine Umformmaschine gelöst, insbesondere Biegemaschine, zum Umformen eines, vorzugsweise plattenförmigen, Werkstückes, umfassend;
- zumindest einen elektromechanischen Antrieb,
- zumindest ein Umformwerkzeug, dessen Arbeitsbewegung durch den elektro-mechanischen Antrieb bewirkt wird,
wobei der elektromechanische Antrieb einen erfindungsgemäßen Spindelantrieb umfasst.

Eine Umformmaschine mit einem erfindungsgemäßen Spindelantrieb weist ebenfalls die eingangs genannten Vorteile auf, wodurch ein verbessertes Anfahrverhalten der Umformmaschine sowie ein energieeffizienter Betrieb gewährleistet ist.

Bei Umformmaschinen wird meist nur der untere Bereich des Spindelantriebes, sprich der Maximalhub für die Umformvorgänge genutzt, wie z.B. bei einer Biegemaschine, wobei der restliche Hub zum Öffnen des Bearbeitungsbereiches bezüglich dem Handling der Bauteile verwendet wird. In diesen Bereichen ist meist ein größerer Hubbereich der Spindel erforderlich, jedoch keine Anwendung unter Belastung (in Form einer Umformung), wodurch die erfindungsgemäßen Ausbildung eines Spindelantriebes wiederum vorteilhaft ist, da der Spindelantrieb für derartige Arbeitsbewegungen besser geeignet ist und dennoch ein präzises Pressverhalten im Hubbereich für den Umformvorgang aufweist.

Zum besseren Verständnis der Erfindung wird diese anhand der nachfolgenden Figuren näher erläutert.

Es zeigen jeweils in stark vereinfachter, schematischer Darstellung:
- Fig. 1: einen elektromechanischen Spindelantrieb;
- Fig. 2: eine Ausführungsform der Rotationseinheit mit einem Innengewinde;
- Fig. 3: eine Ausführungsform mit einem hohlzylindrischen Aufnahmeabschnitt;
- Fig. 4: eine Schrägansicht auf eine Rotationseinheit mit einer Spindel;
- Fig. 5: die Rotationseinheit nach Fig. 4 in Schnittansicht;
- Fig. 6: eine weitere Ausführungsform einer Rotationseinheit;
- Fig. 7: eine Umformmaschine mit einem erfindungsgemäßen Spindelantrieb.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

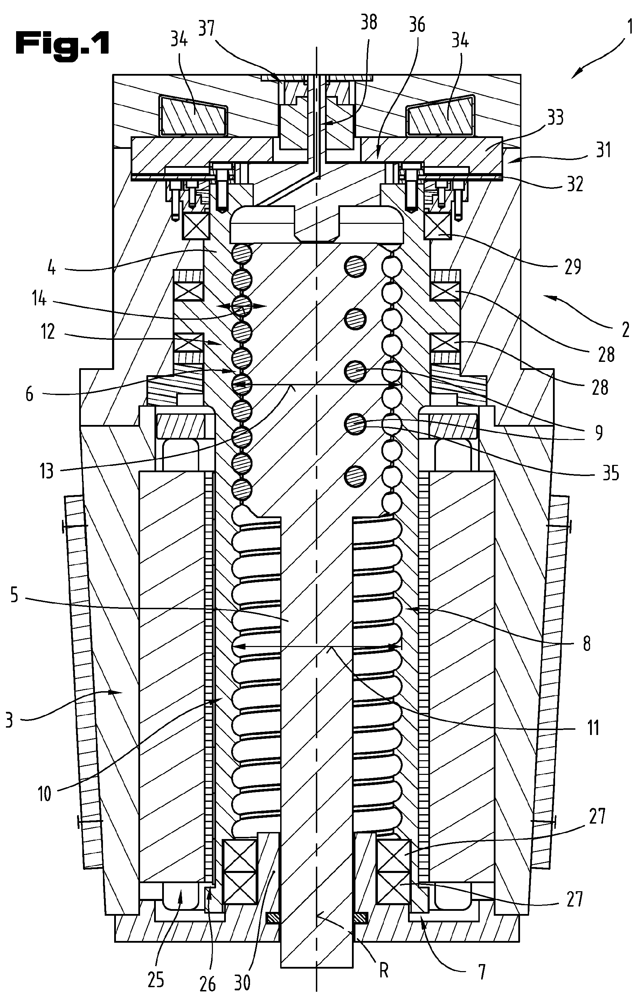

Fig. 1 zeigt einen elektromechanischen Spindelantrieb 1 umfassend ein Gehäuse 2, einen Motor 3 und eine Rotationseinheit 4, der durch den Motor 3 um eine Rotationsachse R in Rotation versetzbar ist. Die Rotationseinheit 4 ist in Form einer Spindelmutter ausgebildet oder umfasst zumindest eine Spindelmutter. Eine Spindel 5 wirkt mit der Rotationseinheit 4 zusammen. Der Gewindeabschnitt 6 bzw. ein Außengewinde der Spindel 5 ist innerhalb der Rotationseinheit 4 aufgenommen und wirkt über Rollelemente 9 mit dem Stellgewinde 8 der Spindelmutter der Rotationseinheit 4 zusammen. Die Spindel 5 tritt an einem Spindelaustrittsende 7 aus der Rotationseinheit 4 aus.

Der Motor 3 weist einen Stator 25, der z.B. an der Innenseite des Gehäuses 2 gelagert ist (z.B. in Form von Wicklungen), und einen Rotor 26, der z.B. mit der Rotationseinheit 4 verbunden und/oder direkt an der Rotationseinheit 4 angeordnet ist (z.B. in Form von Permanentmagneten), auf. Es ist bevorzugt, wenn der Stator 25 des Motors 3 die Rotationseinheit 4 umgibt. Der Rotor 26 des Motors 3 kann - an der Außenseite der Rotationseinheit 4 vorzugsweise abnehmbar, angebrachte - Polelemente, vorzugsweise in Form von Permanentmagneten, umfassen. Bevorzugt ist der Motor 3 ein Synchronmotor.

Erfindungsgemäß weist die Rotationseinheit 4 einen dem Spindelaustrittsende 7 abgewandt angeordneten Aufnahmeabschnitt 12 auf, wobei der Aufnahmeabschnitt 12 entlang der Rotationsachse R zur teilweisen Aufnahme des Gewindeabschnittes 6 der Spindel 5 mit den Rollelementen 9 vorgesehen ist, und ein Durchmesser 13 des Aufnahmeabschnittes 12 zur Begrenzung der Rollelemente 9 radial zur Rotationsachse R größer als der Außendurchmesser 11 dimensioniert ist, sodass die Rollelemente 9 radial zwischen dem Gewindeabschnitt 6 und dem Aufnahmeabschnitt 12 der Rotationseinheit 4 ein mechanisches Spiel 14 aufweisen.

Der Spindelantrieb 1 kann auch Lager 27, 28 und 29 aufweisen, mittels derer der Rotationseinheit 4 relativ zum Gehäuse 2 drehbar gelagert ist. Wie aus Fig. 1 zu sehen ist, kann zumindest eines - vorzugsweise zumindest zwei - der Lager 27 im Bereich des Spindelaustrittsendes 7 der Rotationseinheit 4 angeordnet und/oder in Form eines radialen Lagers ausgebildet sein. Dabei handelt es sich vorzugsweise um ein Wälzlager, insbesondere ein Kugellager.

In einer bevorzugten Ausführungsform der Fig. 1 ist das zumindest eine, im Bereich des Spindelaustrittsendes 7 der Rotationseinheit 4 angeordnete Lager 27 innerhalb der Rotationseinheit 4 - wie dargestellt an einer Innenseite der Rotationseinheit 4 - angeordnet. Es befindet sich zwischen der Innenseite der Rotationseinheit 4 und einer in das Innere der Rotationseinheit 4 ragenden Lageraufnahme 30, die an einem Gehäuseteil, vorzugsweise einem stirnseitigen Gehäusedeckel, des Gehäuses 2 ausgebildet ist.

Aus Fig. 1 ist ebenfalls zu sehen, dass das zumindest eine, im Bereich des Spindelaustrittsendes 7 der Rotationseinheit 4 angeordnete Lager 27 mit dem Stator 25 und/oder dem Rotor 26 des Motors 3 axial überlappend angeordnet sein kann. Mit anderen Worten: die Lager 27 sind innerhalb eines vom Stator 25 und/oder Rotor 26 des Motors 3 umschlossenen Bereichs angeordnet.

Im Bereich des - dem Spindelaustrittsende 7 gegenüberliegenden - Endes der Rotationseinheit 4 kann ein radiales Lager 29 angeordnet sein, durch welches der Rotationsteil relativ zum Gehäuseteil 2 gelagert ist.

Auch (ein) axiale(s) Lager 28 kann/können vorgesehen sein, vorzugsweise im Bereich zwischen dem Motor 3 und einer möglichen Bremseinrichtung 31.

Der elektromechanische Spindelantrieb 1 kann bevorzugt eine zwischen einer Bremsstellung und einer gelösten Stellung betätigbare Bremseinrichtung 31 umfassen, die im Bereich des - dem Spindelaustrittsende 7 gegenüberliegenden - Endes der Rotationseinheit 4 angeordnet ist. Ferner kann die Bremseinrichtung 31 eine mit der Rotationseinheit 4 mitdrehende Bremsscheibe 32 und ein in axialer Richtung verstellbares Bremselement 33, welches in der Bremsstellung auf die Bremsscheibe 32 einwirkt, aufweisen.

Wie aus der Fig. 1 hervorgeht, kann der innere Bereich der Bremsscheibe 32 an dem Rotationseinheit 4 axial fixiert sein. In den dargestellten Ausführungsformen ist innere Bereich der Bremsscheibe 32 mit dem Rotationseinheit überhaupt starr verbunden. Dies erfolgt hier mittels Schrauben, die durch die Löcher ragen und die Bremsscheibe gegen den Rotationseinheit 4 drücken.

Das Bremselement 33 kann in Richtung der Bremsstellung vorgespannt sein, z.B. durch eine Vielzahl von Federn, die ringförmig und vorzugsweise überlappend angeordnet sind.

Die Bremseinrichtung 31 kann einen Aktor 34, vorzugsweise in Form eines Elektromagneten, umfasst, durch den das Bremselement 33 in die gelöste Stellung und/oder in die Bremsstellung bringbar ist. Der Aktor 34 kann in einem abnehmbaren Gehäuseteil des elektromechanischen Spindelantriebes eingesetzt sein.

Aus Fig. 1 ist ersichtlich, dass der Spindelantrieb ein Rollspindelantrieb ist, bei dem Rollelemente 9, insbesondere in Form von Kugeln, in einer Umlaufstrecke geführt sind. Ein erster Abschnitt der Umlaufstrecke ist zwischen dem der Rotationseinheit 4 und dem Gewindeabschnitt 6 der Spindel 5 und ein zweiter Abschnitt ist durch einen Rückführkanal 35 gebildet. Der Rückführkanal 35 kann, wie in der dargestellten Ausführungsform, im Inneren der Spindel 5 ausgebildet sein.

Wie dargestellt, kann an dem - dem Spindelaustrittsende 7 gegenüberliegenden - Ende der Rotationseinheit 4 ein Aufsatzteil 36 mit dem Rotationseinheit 4 verbunden sein, wobei vorzugsweise der Aufsatzteil 36 einen innerhalb der Rotationseinheit 4 befindlichen Abschnitt aufweist und/oder einen Anschlag für die Spindel 5 bildet. Ein außerhalb der Rotationseinheit 4 befindlicher Abschnitt des Aufsatzteiles 36 kann in Form eines Stiftes ausgebildet sein, wobei die Längsachse des stiftförmigen Abschnittes mit der Rotationsachse R der Rotationseinheit 4 zusammenfällt. Der maximale Durchmesser des innerhalb der Rotationseinheit 4 befindlichen Abschnittes des Aufsatzteiles 36 ist bevorzugt zumindest 3 mal, vorzugsweise zumindest 4 mal, so groß ist wie der Durchmesser des stiftförmigen Abschnittes. Der außerhalb Rotationseinheit 4 befindlicher Abschnitt des Aufsatzteils 36 kann bevorzugt im Erfassungsbereich einer Sensoreinrichtung 37 liegen, die vorzugsweise ein Drehgeber ist, der die Drehung des Aufsatzteils 36 bzw. der Rotationseinheit erfasst.

In dem Aufsatzteil 36 kann ein Durchbruch 38 zum Zuführen von Schmiermittel in das Innere der Rotationseinheit 4 ausgebildet sein. Der Verlauf eines ersten Abschnittes des Kanals - vorzugsweise in einem außerhalb des r Rotationseinheit 4 befindlichen Abschnitt des Aufsatzteiles 36 - kann mit der Rotationsachse R der Rotationseinheit 4 fluchten.

Der Verlauf eines zweiten Abschnittes des Durchbruches 38 weist eine - bezüglich der Rotationsachse R - radiale Komponente auf und/oder ist schräg zur Rotationsachse R. Der zweite Abschnitt des Durchbruchs 38 verläuft in einem innerhalb der Rotationseinheit 4 befindlichen Abschnitt des Aufsatzteiles 36 bzw. endet an einer Austrittsstelle, die - bezüglich der Rotationsachse R - in einem peripheren Bereich des Aufsatzteiles 36 angeordnet ist.

Der Aufsatzteil 36 ist in der dargestellten Ausführungsform von der Bremseinrichtung 31 des Spindelantriebes 1 umgeben. Dabei kann der Aufsatzteil 36 innerhalb einer zentralen Ausnehmung der Bremsscheibe 32 liegen und sogar eine vorzugsweise formschlüssige Aufnahme für die Bremsscheibe 32 bildet und somit eine Zentrierfunktion für die Bremsscheibe ausüben.

An der Außenseite des Gehäuses 2 - zumindest im Bereich des Motors 3 - können (z.B. abnehmbare) Kühlrippen angeordnet sein.

Der Spindelantrieb 1 kann modular aufgebaut sein, wodurch auch zur Herstellung und/oder Adaption von Spindelantrieben ein Spindelantrieb-Bauteileset bereitgestellt werden kann. Ein solches Bauteileset umfasst Bauteile für mehrere elektro-mechanische Spindelantriebe. Es weist Bauteile verschiedener Art auf und die Bauteile weisen Verbindungsschnittstellen zur Verbindung der Bauteile untereinander auf. Bauteile derselben Art weisen verschiedene Größen auf, wobei die Verbindungsschnittstellen verschieden großer Bauteile derselben Art gleich dimensioniert sind.

In einem Beispiel umfasst das Bauteileset
- erste Gehäuseteile unterschiedlicher Länge und/oder Breite und
- zweite Gehäuseteile unterschiedlicher Länge und/oder Breite
auf, wobei die Verbindungsschnittstellen der ersten Gehäuseteile zur Verbindung mit den zweiten Gehäuseteilen bei allen ersten Gehäuseteilen und bei allen zweiten Gehäuseteilen gleich dimensioniert sind.

In einem Beispiel umfasst das Bauteileset
- Rotationseinheiten unterschiedlicher Länge und/oder Breite und
- Gehäuseteile unterschiedlicher Länge und/oder Breite und/oder Motoren unterschiedlicher Länge und/oder Breite
auf, wobei die Verbindungsschnittstellen der Rotationseinheiten zur Verbindung mit den Gehäuseteilen und/oder Motoren bei allen Rotationseinheiten gleich dimensioniert sind und/oder wobei die Verbindungsschnittstellen der Gehäuseteilen und/oder Motoren zur Verbindung mit den Rotationseinheit bei allen Gehäuseteilen und/oder Motoren gleich dimensioniert sind.

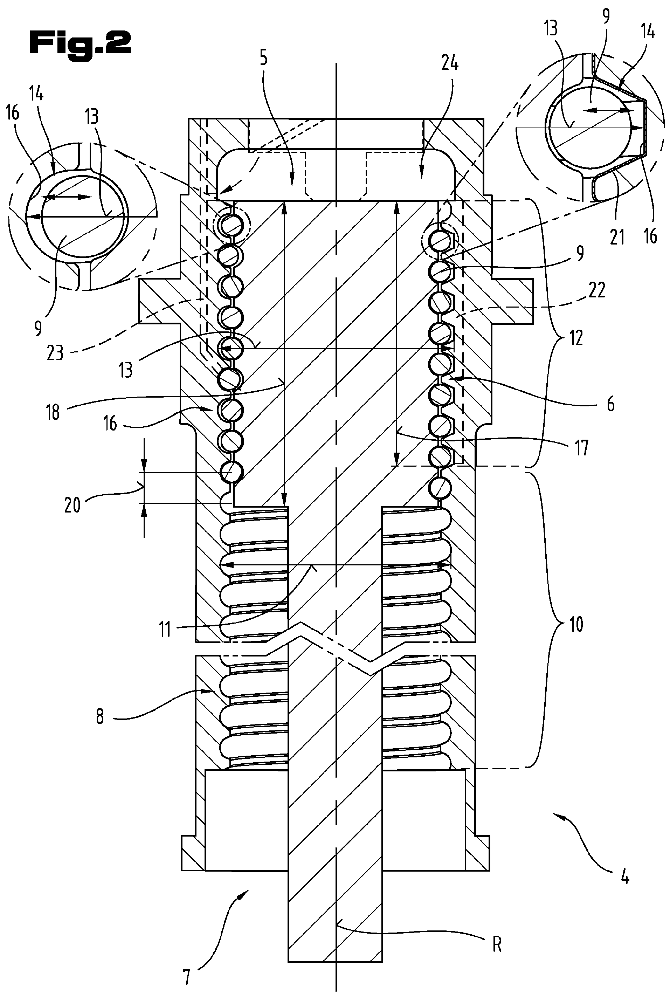

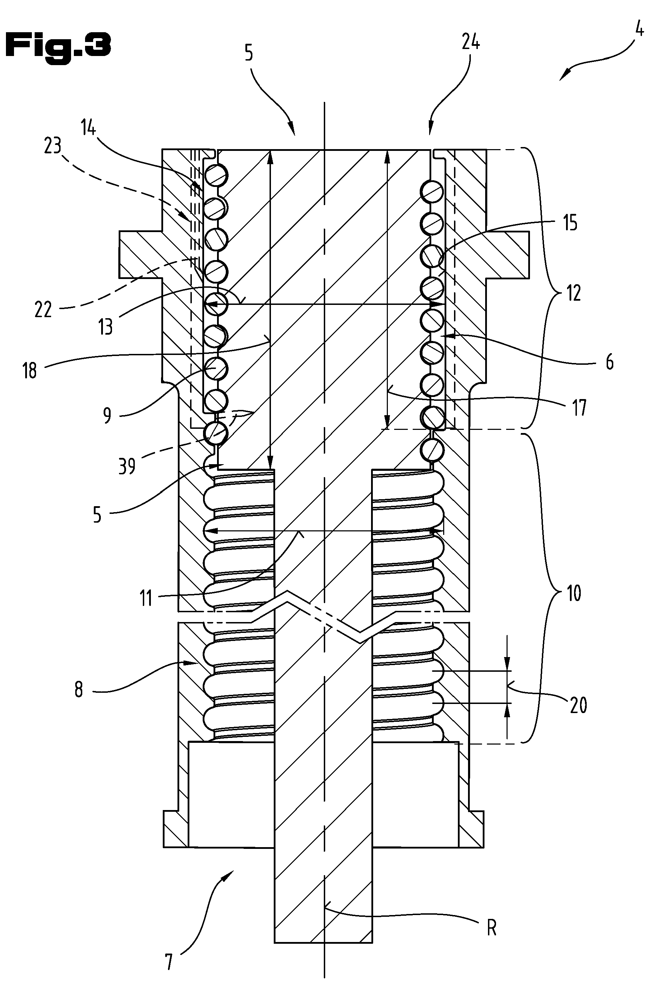

In Fig. 2 und 3 sind mögliche Ausführungsformen des Aufnahmeabschnittes 12 dargestellt.

Der Aufnahmeabschnitt 12 in kann ein Innengewinde 16 aufweisen, das den größeren Durchmesser 13 zur Begrenzung der Rollelemente 9 aufweist, bzw. dieser durch dessen Gewindedurchmesser gebildet ist, wie in Fig. 2 dargestellt.

Das Innengewinde 16 kann einen trapezförmigen Querschnitt aufweisen, wie in der rechten Abbildung in Fig. 2, insbesondere in der zugehörigen Detailansicht, dargestellt ist. Alternativ kann dieser Querschnitt auch rechteckig ausgebildet sein, bzw. auch in der Form eines Dreieckes, wobei der Durchmesser 13 zumindest jenem radialen Abstand entspricht, bezüglich dessen die Rollelemente 9 radial begrenzt werden.

Wie eingangs erwähnt kann dies besonders herstellungstechnische und wirtschaftliche Vorteile mit sich bringen, bzw. auch eine optimale axiale Führung der Rollelemente bei einem mechanischen Spiel 14, das vorrangig radial vorgesehen ist.

In der linken Darstellung in Fig. 2 ist die Gewindeform rund (wie ebenfalls im Detail dargestellt) und kann beispielsweise mit einem dementsprechend geformten Drehwerkzeug hergestellt sein, wobei das Innengewinde bevorzugt lediglich gegenüber dem Stellgewinde mit einem größeren Durchmesser hergestellt wurde. Ein axiales Spiel beträgt hierbei bevorzugt weniger als 0.05mm, insbesondere 0.01mm-0.03mm.

Wie ebenfalls dargestellt, kann entlang der Rotationsachse R eine Höhe 17 des Aufnahmeabschnittes 12 einer Länge 18 des Gewindeabschnittes 6 abzüglich zumindest einer Steigung 20 (bzw. auch als Ganghöhe bekannt) des Gewindeabschnittes 6 entsprechen.

Dies führt dazu, dass sich bei der Aufnahme der Spindel 5 im Aufnahmeabschnitt 12 sich zumindest ein Gewindegang des Gewindeabschnittes 6, sprich eine radiale Anordnung der Rollelementen 9 um zumindest 360° zur Rotationsachse R sich im Wirkabschnitt 10 des Stellgewindes 8 befindet und die Spindel 5 mit diesem Bereich durch die Rollelemente 9 in zumindest einer Umdrehung bezüglich des Gewindes zentriert und geführt gelagert ist.

Abhängig von der Art und Anordnung der Führung der Rollelemente 9, wie in Fig. 1 mit einem Rückführkanal innerhalb der Spindel dargestellt, können die Rollelemente aber auch mehrere Rückführsysteme bzw. Umlaufsysteme aufweisen und in diese Systeme unterteilt sein. Wenn z.B. 2 Kreisläufe der Rollelemente 9 vorgesehen sind und beispielsweise zwischen den Kreisläufen eine Aussparung vorgesehen ist, dann kann zur korrekten Lagerung der Spindel ein größer Bereich zur Kontaktierung im Wirkabschnitt vorgesehen sein, z.B. entsprechend einer zweifachen Steigung des Gewindes. Weiters kann auch eine vorgespannte Anordnung einzelner Gruppen der umlaufenden Rollelemente vorgesehen sein, wie aus dem Stand der Technik bekannt, bezüglich derer der Aufnahmeabschnitt dementsprechend zu adaptieren wäre.

Ferner kann unabhängig von der Ausführungsform des Aufnahmeabschnittes 12 ein Kunststoffgehäuse 22 zur Aufnahme der Rollelemente 9 vorgesehen sein, wie strichliert in Fig. 2 und 3 angedeutet ist.

Weiters kann der Aufnahmeabschnitt 12 unabhängig von seiner Ausführungsform zumindest teilweise eine Beschichtung 21 aufweisen. Die Beschichtung 21 weist bevorzugt zumindest eine gegenüber dem Material des Stellgewindes 8 unterschiedliche Materialeigenschaft auf, umfassend; eine höhere Wärmeleitfähigkeit als das Material des Stellgewindes 8 und/oder einen geringeren Reibungskoeffizienten bzw. höhere Gleiteigenschaften.

An diesem Punkt sei erwähnt, dass bei Vorsehen einer derartigen Beschichtung 21 oder einem zuvor erwähnten Kunststoffgehäuse 22 der Durchmesser 13 des Aufnahmeabschnittes 12 durch diese Elemente definiert werden kann und somit die Rollelemente durch diese Elemente radial begrenzt werden. Zudem kann auch das Kunststoffgehäuse die Beschichtung aufweisen.

Beispielsweise kann der Aufnahmeabschnitt 12 zuerst holzylindrisch ausgeformt werden, wobei in die Zylinderform das Kunststoffgehäuse 22 eingesetzt wird und das Kunststoffgehäuse z.B. das Innengewinde für den Aufnahmeabschnitt 12 aufweist, sowie den Durchmesser zur Begrenzung der Rollelemente.

Ferner kann in der Rotationseinheit 4 bzw. in dem Aufnahmeabschnitt 12 ein Schmiermittelkanal 23 zur Einbringung von Schmiermittel vorgesehen sein, wobei der Schmiermittelkanal 23 bevorzugt im Aufnahmeabschnitt 12 in seinem Aufnahmebereich für die Rollelemente einmündet. Wie in Fig. 2 angedeutet, kann der Schmiermittelkanal 23 zur Weiterleitung des über den Durchbruch 38 eingebrachten Schmermittels nach Fig. 1 ausgebildet sein, welches bevorzugt aufgrund der Rotation radial nach außen in den Kanal verdrängt werden kann.

Wie in Fig. 3 weiters angedeutet, kann der Schmiermittelkanal 23 auch in dem Kunststoffgehäuse 22 ausgebildet sein, wodurch eine vereinfachte Einbringung eines solchen Kanals mit dem Einsetzen des Kunststoffgehäuses ermöglicht ist, sowie eine wesentlich komplexere Ausgestaltung des Kanals möglich ist.

Der Aufnahmeabschnitt 12 nach Fig. 3 ist in der Form eines Hohlzylinders ausgebildet, wobei der Durchmesser 13 durch eine Mantelinnenfläche 15 des Hohlzylinders gebildet ist. Bei dieser Ausführungsform können die Rollelemente 9 bezüglich der Spindelmutter ab dem Eintreten in den Aufnahmeabschnitt 12 axial frei beweglich sein und werden diesbezüglich nur durch den Gewindeabschnitt 6 der Spindel 5 in Axialrichtung (bzw. entlang der Rotationsachse R begrenzt. Der hohlzylindrische Aufnahmeabschnitt 12 kann wiederum eine zuvor genannte Beschichtung aufweisen.

Weiters ist in Fig. 3 eine Führungshilfe 39 angedeutet, welche zum erleichterten Einführen der Rollelemente 9 in den Wirkabschnitt 10 des Stellgewindes 8 vorgesehen sein kann. Die Führungshilfe 39 ist bevorzugt an der den Rollelementen zugewandten Innenseite des Aufnahmeabschnittes 12 ausgebildet und kann die Form einer Rampe, eines Absatzes, eines radialen Vorsprunges oder dergleichen aufweisen.

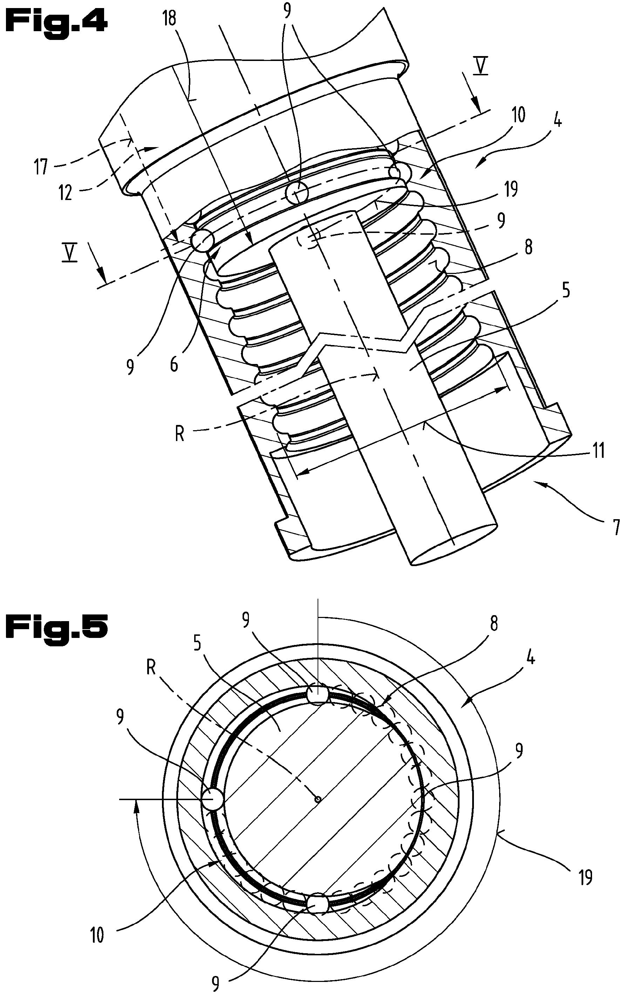

Wie aus den Fig. 4 und 5 ersichtlich, entlang der Rotationsachse R die Höhe 17 des Aufnahmeabschnittes 12 derart gewählt sein, dass der Gewindeabschnitt 6 bezüglich seiner Länge 18 im Aufnahmeabschnitt 12 aufnehmbar ist und gleichzeitig im Wirkabschnitt 10 des Stellgewindes 8 mittels der Rollelemente 9 radial zur Rotationsachse R in einem Winkel 19 von zumindest 270° (bzw. einer 3/4 Umdrehung) gelagert ist.

Mittels dieser Ausführungsform ist die Spindel 5 mittels zumindest einer radialen 4-Punkt Kontaktauflage der Rollelemente 9 in einem Ende des Wirkabschnittes zentriert gelagert, sodass diese um 90° versetzt zueinander in dem Bereich des Winkels angeordnet sind.

In Fig. 4 ist ein Teil der Rotationseinheit 4 entfernt, sowie ein überwiegender Anteil der Rollelemente, sodass die 4-Punkt- Auflage der Rollelemente 9 ersichtlich ist, wie diese ebenfalls in Fig. 5 angedeutet ist.

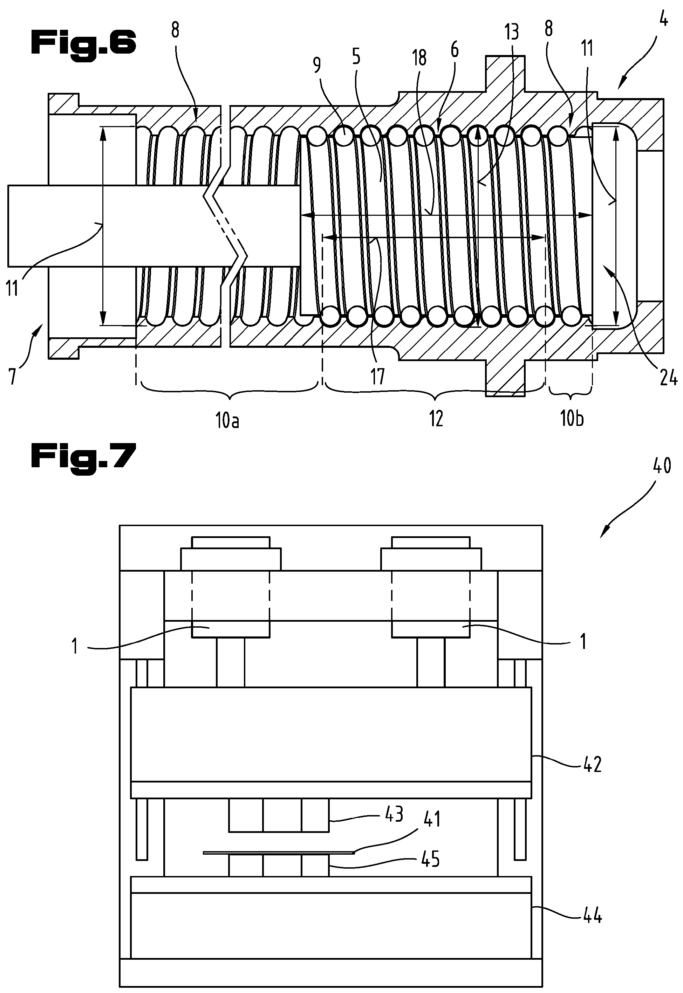

In Fig. 6 ist eine Ausführungsform der Rotationseinheit 4 schematisch dargestellt, bei der entlang der Rotationsachse R dem Spindelaustrittsende7 gegenüberliegend nach dem Aufnahmeabschnitt 12 ein weiterer Teil 10b des Wirkabschnittes 10 des Stellgewindes 8 angeordnet ist, sodass der Aufnahmeabschnitt 12 bezüglich der Rotationsachse R zwischen Teilbereichen des Wirkabschnittes 10a, 10b des Stellgewindes 8 angeordnet ist. Somit ist mit dem Stellgewinde 8 bezüglich der axialen Verstellung der Spindel bezüglich der Rotationsachse R das zweite Ende 24 der Rotationseinheit 4 gebildet.

So kann wiederum die Höhe 17 des Aufnahmeabschnittes 12 gegenüber der Länge 18 des Gewindeabschnittes 6 derart gewählt sein, dass die Differenz zumindest eine Gewindesteigung des Stellgewindes entspricht. Ferner kann vorgesehen sein, dass die Spindel 5 zumindest gegenüber dem Wirkabschnitt 10a,10b des Stellgewindes 8 in den Teilbereichen zumindest in der zuvor erwähnten 4-Punktauflage, über 270° gelagert ist.

In den Figuren 2 bis 6 sind weitere und gegebenenfalls für sich eigenständige Ausführungsformen der Rotationseinheit 4 gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Weiters ist die in den Figuren 1 bis 6 dargestellte Spindel jeweils in einer oberen Endposition, bzw. Startposition dargestellt, sowie die Rollelemente in den Schnittdarstellungen in der jeweiligen Position. Dabei sei erwähnt, dass bei einer Verstellung der Spindel entlang der Rotationsachse sich die Rollelemente jeweils mit der Spindel in der jeweiligen Position des Gewindeabschnittes bezüglich der aktuellen Verstellposition befinden und axial von der Spindel begrenzt bzw. von dieser mitgenommen werden.

Fig. 7 zeigt schließlich eine Umformmaschine 40 in Form einer Biegepresse zum Umformen eines vorzugsweisen plattenförmigen Werkstückes 41, mit zumindest einem Antrieb für die Arbeitsbewegung (eines Umformwerkzeuges), insbesondere Pressantrieb. Der Antrieb bzw. die Antriebe sind dabei als elektromechanische(r) Antrieb(e) 1 gemäß der Erfindung ausgebildet. Eine solche Umformmaschine kann einen ersten (z.B. oberen) Werkzeugträger 42 (zum Halten zumindest eines ersten Umformwerkzeuges 43) und einen zweiten (z.B. unteren) Werkzeugträger 44 (zum Halten zumindest eines zweiten Umformwerkzeuges 45) umfassen, deren Relativbewegung die Arbeitsbewegung ist. Dabei kann - wie in Fig. 7 dargestellt - der zweite Werkzeugträger 44 stationär sein, während der erste Werkzeugträger 42 durch den/die Antrieb(e) 1 bewegbar ist.

Die Umformmaschine belastet die Spindel des Spindelantriebs meist nur bei (fast) vollständig ausgefahrenen Hublängen, wodurch eine lastfreie Lagerung im Aufnahmeabschnitt, sowie ein leichtgängiger Betrieb der Spindel in diesen Bereich besonders vorteilhaft ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Elektromechanischer Spindelantrieb | 30 | Lageraufnahme |
| | | 31 | Bremseinrichtung |
| 2 | Gehäuse | 32 | Bremsscheibe |
| 3 | Motor | 33 | Bremselement |
| 4 | Rotationseinheit | 34 | Aktor |
| 5 | Spindel | 35 | Rückführkanal |
| 6 | Gewindeabschnitt | 36 | Aufsatzteil |
| 7 | Spindelaustrittsende | 37 | Sensoreinrichtung |
| 8 | Stellgewinde | 38 | Durchbruch |
| 9 | Rollelemente | 39 | Führungshilfe |
| 10 | Wirkabschnitt | 40 | Umformmaschine |
| 11 | Außendurchmesser | 41 | Werkstück |
| 12 | Aufnahmeabschnitt | 42 | erster Werkzeugträger |
| 13 | Durchmesser | 43 | erstes Umformwerkzeug |
| 14 | mechanisches Spiel | 44 | zweiter Werkzeugträger |
| 15 | Mantelinnenfläche | 45 | zweites Umformwerkzeug |
| 16 | Innengewinde | | |
| 17 | Höhe | | |
| 18 | Länge | | |
| 19 | Winkel | | |
| 20 | Steigung | | |
| 21 | Beschichtung | | |
| 22 | Kunststoffgehäuse | | |
| 23 | Schmiermittelkanal | | |
| 24 | zweites Ende | | |
| 25 | Stator | | |
| 26 | Rotor | | |
| 27 | Lager | | |
| 28 | Lager | | |
| 29 | Lager | | |

## Patentansprüche

1. Elektromechanischer Spindelantrieb (1), umfassend
- ein Gehäuse (2);
- einen Motor (3);
- eine Rotationseinheit (4) mit einer Spindelmutter, wobei die Rotationseinheit (4) mittels des Motors (3) um eine Rotationsachse (R) in Rotation versetzbar ist;
- eine Spindel (5), wobei die Spindel (5) einen mit der Rotationseinheit (4) zusammenwirkenden Gewindeabschnitt (6) aufweist und mittels der Rotationseinheit (4) bezüglich der Rotationsachse (R) axial verstellbar ist, sodass die Spindel (5) aus einem Spindelaustrittsende (7) der Rotationseinheit (4) vice versa verstellbar ist;
wobei zwischen einem Stellgewinde (8) der Rotationseinheit (4) und dem Gewindeabschnitt (6) mehrere Rollelemente (9) zur Lagerung der Spindel (5) angeordnet sind; und das Stellgewinde (8) in einem Wirkabschnitt (10) der Rotationseinheit (4) radial zur Rotationsachse (R) einen Außendurchmesser (11) zur Führung der Rollelemente (9) aufweist, und
wobei die Rotationseinheit (4) einen dem Spindelaustrittsende (7) abgewandt angeordneten Aufnahmeabschnitt (12) aufweist, wobei der Aufnahmeabschnitt (12) entlang der Rotationsachse (R) zur teilweisen Aufnahme des Gewindeabschnittes (6) der Spindel (5) mit den Rollelementen (9) vorgesehen ist,
**dadurch gekennzeichnet, dass** ein Durchmesser (13) des Aufnahmeabschnittes (12) zur Begrenzung der Rollelemente (9) radial zur Rotationsachse (R) größer als der Außendurchmesser (11) dimensioniert ist, sodass die Rollelemente (9) radial zwischen dem Gewindeabschnitt (6) und dem Aufnahmeabschnitt (12) der Rotationseinheit (4) ein mechanisches Spiel (14) aufweisen.

2. Elektromechanischer Spindelantrieb (1) nach Anspruch 1, **dadurch gekennzeichnet, dass** der Aufnahmeabschnitt (12) hohlzylindrisch ausgebildet ist, wobei der Durchmesser (13) durch eine Mantelinnenfläche (15) des hohlzylindrischen Aufnahmeabschnittes (12) gebildet ist.

3. Elektromechanischer Spindelantrieb (1) nach Anspruch 1, **dadurch gekennzeichnet, dass** der Aufnahmeabschnitt (12) ein Innengewinde (16) aufweist, wobei der Durchmesser (13) durch einen Gewindedurchmesser des Innengewindes (16) gebildet ist.

4. Elektromechanischer Spindelantrieb (1) nach einem der Ansprüche 1 bis 3, **dadurch gekennzeichnet, dass** eine Differenz zwischen dem Durchmesser (13) und dem Außendurchmesser (11) 0,05mm bis 0,2mm, insbesondere 0,1mm bis 0,15 mm beträgt.

5. Elektromechanischer Spindelantrieb (1) nach einem der Ansprüche 1 bis 4, **dadurch gekennzeichnet, dass** entlang der Rotationsachse (R) eine Höhe (17) des Aufnahmeabschnittes (12) derart gewählt ist, dass der Gewindeabschnitt (6) im Aufnahmeabschnitt (12) aufnehmbar ist und gleichzeitig im Wirkabschnitt (10) des Stellgewindes (8) mittels der Rollelemente (9) radial zur Rotationsachse (R) in einem Winkel (19) von zumindest 270° gelagert ist.

6. Elektromechanischer Spindelantrieb (1) nach einem der Ansprüche 1 bis 5, **dadurch gekennzeichnet, dass** entlang der Rotationsachse (R) eine Höhe (17) des Aufnahmeabschnittes (12) einer Länge (18) des Gewindeabschnittes (6) abzüglich zumindest einer Steigung (20) des Gewindeabschnittes (6) entspricht.

7. Elektromechanischer Spindelantrieb (1) nach einem der Ansprüche 1 bis 6, **dadurch gekennzeichnet, dass** im Aufnahmeabschnitt (12) den Rollelementen (9) zugewandt eine Beschichtung (21) vorgesehen ist, wobei die Beschichtung (21) zumindest eine der folgenden Eigenschaften aufweist;
- eine höhere Wärmeleitfähigkeit als ein Material des Stellgewindes (8).
- einen geringeren Reibungskoeffizienten als das Material des Stellgewindes (8).

8. Elektromechanischer Spindelantrieb (1) nach einem der Ansprüche 1 bis 7, **dadurch gekennzeichnet, dass** im Aufnahmeabschnitt (12) ein Kunststoffgehäuse (22) zur Aufnahme der Rollelemente (9) angeordnet ist.

9. Elektromechanischer Spindelantrieb (1) nach einem der Ansprüche 1 bis 8, **dadurch gekennzeichnet, dass** im Aufnahmeabschnitt (12) zumindest ein Schmiermittelkanal (23) vorgesehen ist.

10. Elektromechanischer Spindelantrieb (1) nach einem der Ansprüche 1 bis 9, **dadurch gekennzeichnet, dass** bezüglich der Rotationsachse (R) mittels des Aufnahmeabschnittes (12) axial ein zweites Ende (24) der Rotationseinheit (4) bezüglich der Verstellung der Spindel (5) gebildet ist.

11. Elektromechanischer Spindelantrieb (1) nach einem der Ansprüche 1 bis 9, **dadurch gekennzeichnet, dass** entlang der Rotationsachse (R) dem Spindelaustrittsende(7) gegenüberliegend nach dem Aufnahmeabschnitt (12) ein weiterer Teil des Wirkabschnittes (10) des Stellgewindes (8) angeordnet ist, sodass der Aufnahmeabschnitt (12) bezüglich der Rotationsachse (R) zwischen Teilbereichen des Stellgewindes (8) angeordnet ist.

12. Umformmaschine, insbesondere Biegemaschine, zum Umformen eines, vorzugsweise plattenförmigen, Werkstückes, umfassend;
- zumindest einen elektromechanischen Antrieb,
- zumindest ein Umformwerkzeug, dessen Arbeitsbewegung durch den elektromechanischen Antrieb bewirkt wird,
**dadurch gekennzeichnet, dass** der elektromechanische Antrieb ein Spindelantrieb (1) nach einem der Ansprüche 1 bis 11 ist.

## Claims

1. An electromechanical spindle drive (1), comprising
- a housing (2);
- a motor (3);
- a rotation unit (4) with a spindle nut, wherein the rotation unit (4) can be set in rotation about an axis of rotation (R) by means of the motor (3);
- a spindle (5), wherein the spindle (5) has a threaded section (6) which interacts with the rotation unit (4) and is axially adjustable relative to the axis of rotation (R) by means of the rotation unit (4), such that the spindle (5) can be adjusted back and forth from a spindle exit end (7) of the rotation unit (4);
wherein multiple rolling elements (9) for supporting the spindle (5) are arranged between an adjustment thread (8) of the rotation unit (4) and the threaded section (6); and the adjustment thread (8), radially to the axis of rotation (R) in an effective section (10) of the rotation unit (4), has an outer diameter (11) for guiding the rolling elements (9), and
wherein the rotation unit (4) comprises a receiving section (12) arranged facing away from the spindle exit end (7), wherein the receiving section (12) is provided along the axis of rotation (R) to partially receive the threaded section (6) of the spindle (5) together with the rolling elements (9),
**characterized in that** a diameter (13) of the receiving section (12) for confining the rolling elements (9) is dimensioned to be larger, radially with respect to the axis of rotation (R), than the outer diameter (11), such that the rolling elements (9) have a mechanical clearance (14) radially between the threaded section (6) and the receiving section (12) of the rotation unit (4).

2. The electromechanical spindle drive (1) according to claim 1, **characterized in that** the receiving section (12) is formed hollow-cylindrically, wherein the diameter (13) is defined by an inner lateral surface (15) of the hollow cylindrical receiving section (12).

3. The electromechanical spindle drive (1) according to claim 1, **characterized in that** the receiving section (12) has an internal thread (16), wherein the diameter (13) is formed by a thread diameter of the internal thread (16).

4. The electromechanical spindle drive (1) according to one of claims 1 to 3, **characterized in that** the difference between the diameter (13) and the outer diameter (11) is 0.05 mm to 0.2 mm, in particular 0.1 mm to 0.15 mm.

5. The electromechanical spindle drive (1) according to one of claims 1 to 4, **characterized in that**, along the axis of rotation (R), a height (17) of the receiving section (12) is selected such that the threaded section (6) can be received within the receiving section (12) and, at the same time, is supported within the effective section (10) of the adjustment thread (8) by means of the rolling elements (9) radially to the axis of rotation (R) at an angle (19) of at least 270°.

6. The electromechanical spindle drive (1) according to one of claims 1 to 5, **characterized in that**, along the axis of rotation (R), a height (17) of the receiving section (12) corresponds to a length (18) of the threaded section (6) minus at least one pitch (20) of the threaded section (6).

7. The electromechanical spindle drive (1) according to one of claims 1 to 6, **characterized in that** a coating (21) is provided in the receiving section (12) facing the rolling elements (9), wherein the coating (21) has at least one of the following properties:
- a higher thermal conductivity than a material of the adjustment thread (8),
- a lower friction coefficient than the material of the adjustment thread (8).

8. The electromechanical spindle drive (1) according to one of claims 1 to 7, **characterized in that** a plastic housing (22) for receiving the rolling elements (9) is arranged in the receiving section (12).

9. The electromechanical spindle drive (1) according to one of claims 1 to 8, **characterized in that** at least one lubricant channel (23) is provided in the receiving section (12).

10. The electromechanical spindle drive (1) according to one of claims 1 to 9, **characterized in that**, with respect to the axis of rotation (R), a second end (24) of the rotation unit (4) is formed axially by means of the receiving section (12) in relation to the adjustment of the spindle (5).

11. The electromechanical spindle drive (1) according to one of claims 1 to 9, **characterized in that**, along the axis of rotation (R), a further part of the effective section (10) of the adjustment thread (8) is arranged opposite the spindle exit end (7) and following the receiving section (12), such that the receiving section (12) is arranged between sub-sections of the adjustment thread (8) relative to the axis of rotation (R).

12. A forming machine, in particular a bending machine, for forming a workpiece, preferably in the form of a plate, comprising:
- at least one electromechanical drive,
- at least one forming tool, the working movement of which is effected by the electromechanical drive,
**characterized in that** the electromechanical drive is a spindle drive (1) according to one of claims 1 to 11.

## Revendications

1. Entraînement électromécanique par broche (1), comprenant
- un boîtier (2) ;
- un moteur (3) ;
- une unité de rotation (4) comprend un écrou de broche, dans lequel l'unité de rotation (4) peut être mise en rotation autour d'un axe de rotation (R) au moyen du moteur (3) ;
- une broche (5), dans lequel la broche (5) présente une partie filetée (6) coopérant avec l'unité de rotation (4) et peut être déplacée de manière axiale par rapport à l'axe de rotation (R) au moyen de l'unité de rotation (4), de sorte que la broche (5) peut être déplacée à partir d'une extrémité de sortie de broche (7) de l'unité de rotation (4) et inversement ;
dans lequel plusieurs éléments de roulement (9) sont agencés entre un filetage de réglage (8) de l'unité de rotation (4) et la partie filetée (6) afin de mettre sur palier la broche (5) ; et le filetage de réglage (8) présente un diamètre extérieur (11) dans une section active (10) de l'unité de rotation (4) de manière radiale par rapport à l'axe de rotation (R) afin de guider les éléments de roulement (9), et
dans lequel l'unité de rotation (4) présente une partie de réception (12) agencée à l'opposé de l'extrémité de sortie de broche (7), dans lequel la partie de réception (12) est fournie le long de l'axe de rotation (R) afin d'accueillir partiellement la partie filetée (6) de la broche (5) avec les éléments de roulement (9),
**caractérisé en ce qu'**un diamètre (13) de la partie de réception (12) est dimensionné de manière à être supérieur au diamètre extérieur (11) afin de limiter les éléments de roulement (9) de manière radiale par rapport à l'axe de rotation (R), de sorte que les éléments de roulement (9) présentent un jeu mécanique (14) de manière radiale entre la partie filetée (6) et la partie de réception (12) de l'unité de rotation (4).

2. Entraînement électromécanique par broche (1) selon la revendication 1, **caractérisé en ce que** la partie de réception (12) est réalisée en forme de cylindre creux, dans lequel le diamètre (13) est formé par une surface intérieure d'enveloppe (15) de la partie de réception (12) en forme de cylindre creux.

3. Entraînement électromécanique par broche (1) selon la revendication 1, **caractérisé en ce que** la partie de réception (12) présente un filetage intérieur (16), dans lequel le diamètre (13) est formé par un diamètre de filetage du filetage intérieur (16).

4. Entraînement électromécanique par broche (1) selon l'une quelconque des revendications 1 à 3, **caractérisé en ce qu'**une différence entre le diamètre (13) et le diamètre extérieur (11) est comprise entre 0,05 mm et 0,2 mm, en particulier entre 0,1 mm et 0,15 mm.

5. Entraînement électromécanique par broche (1) selon l'une quelconque des revendications 1 à 4, **caractérisé en ce qu'**une hauteur (17) de la partie de réception (12) le long de l'axe de rotation (R) est choisie de telle manière que la partie filetée (6) peut être accueillie dans la partie de réception (12) et est simultanément mise sur palier dans la section active (10) du filetage de réglage (8) de manière radiale par rapport à l'axe de rotation (R) selon un angle (19) d'au moins 270° au moyen des éléments de roulement (9).

6. Entraînement électromécanique par broche (1) selon l'une quelconque des revendications 1 à 5, **caractérisé en ce qu'**une hauteur (17) de la partie de réception (12) le long de l'axe de rotation (R) correspond à une longueur (18) de la partie filetée (6) à laquelle on retranche au moins un pas (20) de la partie filetée (6).

7. Entraînement électromécanique par broche (1) selon l'une quelconque des revendications 1 à 6, **caractérisé en ce qu'**un revêtement (21) est fourni dans la partie de réception (12) en face des éléments de roulement (9), dans lequel le revêtement (21) présente au moins une des propriétés ci-dessous ;
- une conductivité thermique supérieure à celle du matériau du filetage de réglage (8).
- un coefficient de frottement inférieur à celui du matériau du filetage de réglage (8).

8. Entraînement électromécanique par broche (1) selon l'une quelconque des revendications 1 à 7, **caractérisé en ce qu'**un boîtier en plastique (22) est agencé dans la partie de réception (12) afin d'accueillir les éléments de roulement (9).

9. Entraînement électromécanique par broche (1) selon l'une quelconque des revendications 1 à 8, **caractérisé en ce qu'**au moins un canal pour lubrifiant (23) est fourni dans la partie de réception (12).

10. Entraînement électromécanique par broche (1) selon l'une quelconque des revendications 1 à 9, **caractérisé en ce qu'**une seconde extrémité (24) de l'unité de rotation (4) par rapport au déplacement de la broche (5) est formée de manière axiale par rapport à l'axe de rotation (R) au moyen de la partie de réception (12).

11. Actionneur linéaire électromécanique (1) selon l'une quelconque des revendications 1 à 9, **caractérisé en ce qu'**une autre partie de la section active (10) du filetage de réglage (8) est agencée le long de l'axe de rotation (R) à l'opposé de l'extrémité de sortie de broche (7) en aval de la partie de réception (12), de sorte que la partie de réception (12) est agencée entre des sous-régions du filetage de réglage (8) par rapport à l'axe de rotation (R).

12. Machine de formage, en particulier machine à cintrer, permettant de mettre en forme une pièce à usiner, de manière préférée en forme de plaque, comprenant :
- au moins un entraînement électromécanique,
- au moins un outil de formage dont le mouvement de travail est provoqué par l'entraînement électromécanique,
**caractérisé en ce que** l'entraînement électromécanique est un entraînement par broche (1) selon l'une quelconque des revendications 1 à 11.
